# EUROPÄISCHE PATENTSCHRIFT

(11) **EP 3 583 238 B1**
(45) Veröffentlichungstag und Bekanntmachung des Hinweises auf die Patenterteilung: **03.04.2024**
(21) Anmeldenummer: 18714693.1
(22) Anmeldetag: 16.02.2018
(51) Int. Cl.: C22C 18/00, C22C 18/04, C22C 38/00, C23C 2/06, C23C 2/40, C21D 8/02, C21D 8/04, C22C 38/02, C22C 38/04, C22C 38/06, C22C 38/12, C22C 38/14

(54) **VERFAHREN ZUM HERSTELLEN VON STAHLBLECHEN, STAHLBLECH UND DESSEN VERWENDUNG**
METHOD FOR PRODUCING STEEL SHEETS, STEEL SHEET, AND USE THEREOF
PROCÉDÉ DE FABRICATION DE TÔLES D'ACIER, TÔLE D'ACIER ET SON UTILISATION

(30) Priorität: 17.02.2017 DE 102017103308
(43) Veröffentlichungstag der Anmeldung: 25.12.2019
(73) Patentinhaber: voestalpine Stahl GmbH, 4020 Linz (AT)
(72) Erfinder: HEBESBERGER, Thomas, 4061 Pasching (AT); PAESOLD, Dieter, 4501 Neuhofen (AT); STÖGMÜLLER,Markus, 4061 Pasching (AT)
(74) Vertreter: HGF
(86) Internationale Anmeldenummer: PCT/EP2018/053883
(87) Internationale Veröffentlichungsnummer: WO 2018/149966

(56) Entgegenhaltungen:
- WO-A1-2016/055227
- DE-A1-102012 017 703
- DE-T2- 3 686 816
- BASJAN BERKHOUT: "PREMIUM PAINT APPEARANCE: SERICA , THE HOT-DIP GALVANISED SURFACE FINISH FOR EXPOSED AUTOMOTIVE PANELS", INTERNATIONAL PAINT&COATING MAGAZINE, Nr. 34, 31. August 2015 (2015-08-31), Seiten 92-96, XP055471246,
- Stahl Wirtschaftsvereinigung: "Continuously Hot-Dip Coated Steel Strip and Sheet Characteristic Properties 095 - E", , 31. Dezember 2017 (2017-12-31), XP055471249, Gefunden im Internet: URL:http://www.stahl-online.de/wp-content/ uploads/2013/10/CM-095E_Continuously-Hot-D ip-Coated-Steel-Strip-and-Sheet_final.pdf [gefunden am 2018-04-27]

## Beschreibung

Die vorliegende Erfindung betrifft ein Verfahren zur Herstellung von Stahlblechen mit einer verbesserten optischen Güte nach dem Umformen.

Um das optische Erscheinungsbild von Automobilen im lackierten Zustand weiter zu verbessern, wurde herausgefunden, dass die Anpassung der Bandtopographie zur Verbesserung der Lackanmutung zwar wichtig, aber nicht ausreichend ist. Eine Vielzahl von Parametern ist für ein gutes Lackerscheinungsbild beim Fertigen von geformten und lackierten Blechen maßgeblich.

Eine wesentliche Maßzahl für eine gute Lackierbarkeit und eine gute Lackanmutung ist der sogenannte Wave-Surface-Arithmetic-Value (Wsa). In www.blechnet.com "Neuartige Blechverzinkung bringt Automobillack auf Hochglanz", 17. Oktober 2013, wird ausgeführt, dass ein Wsa-Wert der Bleche unter 0,35 µm für gute Lackanmutung sorgt. Ein niedriger Wsa-Wert würde zunächst gute Lackanmutung bedeuten. Weil der Wsa-Wert zugleich mit der mittleren Rauheit (Ra) korreliere, würde auch die Umformfähigkeit beeinflusst. Es wird ausgeführt, dass es in der Praxis darauf ankäme, den Wsa-Wert der Bleche unter 0,35 µm zu senken, wobei bei herkömmlichen Blechen der Wsa durchaus über 0,5 µm liegen würde, und gleichzeitig genügend Schmiertaschen für die Umformung zur Verfügung zu stellen, was durch die Erhöhung der sogenannten Spitzenzahl gelänge.

Hierbei wird darauf abgestellt, mit der Dressierwalze ähnlich wie in der Drucktechnik die spätere Topografie des Blechs als negative Zugabe vorweg zu nehmen. Um die oben genannten Wsa-Werte zu erreichen, wurden neue Walzentexturen hergestellt, zudem wurden thermische Prozesse in den Öfen verbessert.

Ein vergleichbarer Bericht ist von thyssenkrupp Steel Europe unter www.besserlackieren.de veröffentlicht, in dem ebenfalls beschrieben wird, dass die Oberflächenbearbeitung des verzinkten Blechs eine entsprechende Güte ermöglicht.

Aus der EP 0 234 698 B1 ist z. B. ein Verfahren bekannt, bei dem eine Oberflächenrauheit mit definierten Erhebungsbereichen erzeugt wird.

Aus der DE 112014000102 T5 ist ein Verfahren bekannt, welches durch spezielle Düseneinstellungen die Welligkeit von Automobilteilen verringern soll.

Aus der ÖNORM EN10346 sind kontinuierlich schmelztauchveredelte Flacherzeugnisse aus Stahl zum Kaltumformen bekannt, wobei diese Norm die bekannten Beschichtungen Zink, Zinkeisen, Zinkaluminium, Zinkmagnesium und Aluminiumzink und Aluminiumsilizium betrifft.

Aus "Premium paint appearance: serica, the hot-dip galvanized surface finish for exposed automotive panels" von B. Berkhout (Int. P. & C. Mag., N. 34, July/August 2015) ist es bekannt, dass die Oberflächeneigenschaften eines Stahlsubstrates die Enderscheinung nach dem Färben beeinflussen. Insbesondere sind hierbei die Rauheit der Stahloberfläche und die Welligkeit (Wa_{0.8}), entscheidend, welche in der Dressieranlage eingestellt werden. Die Welligkeit wird hierfür nicht bei einem Flachprodukt, sondern erst nach einer Umformung bestimmt und muss einen Wert von ≤0,40 µm aufweisen. Die Rauheit beträgt dabei 0,9-1,4 µm.

Die dort genannten Stähle sind durchgehend niedriglegierte Stähle und insbesondere Mehrphasenstähle, TRIP-Stähle, Komplexphasenstähle und ferritisch-bainitische Stähle.

Insbesondere werden im Automobilbereich in der Außenhaut IF- und BH-Stähle eingesetzt.

Unter einem IF-Stahl versteht man einen "Interstitial Free"-Stahl, der keine interstitiell eingelagerten Fremdatome besitzt (die geringen Gehalte an Kohlenstoff und Stickstoff sind vollständig durch Titan und/oder Niob als Karbide bzw. Nitride abgebunden) und damit eine hervorragende plastische Umformbarkeit besitzt. Derartige Stähle werden für Tiefziehteile im Automobilbau eingesetzt.

Bake-Hardening Stähle (BH-Stähle) zeichnen sich durch einen signifikanten Anstieg der Streckgrenze im Zuge des Lackeinbrennens (typischerweise bei 170°C für 20min) in Kombination mit einer sehr guten Umformbarkeit aus. Weiters besitzen diese Stähle eine sehr gute Beulsteifigkeit, weswegen diese Stähle gerne für Außenhautanwendungen verwendet werden.

Aufgabe der Erfindung ist es, ein Verfahren zur Herstellung von Stahlblechen zu schaffen, mit dem die gewünschten Wsa-Werte im verformten Zustand besser erreicht werden und die Bereiche sicher gehalten werden können.

Die Aufgabe wird mit einem Verfahren mit den Merkmalen des Anspruchs 1 gelöst.

Die Messung der Wsa-Werte erfolgte an Marciniak-Streckziehproben mit 5% Verformung in Anlehnung an SEP1941, aber in Walzrichtung.

Erfindungsgemäß wurde festgestellt, dass allein durch die Optimierung der Langwelligkeit im unverformten Zustand der Wsa-Wert von Außenhautteilen im verformten Zustand nicht zuverlässig und sicher im gewünschten Bereich <0,35 µm gehalten werden kann.

Erfindungsgemäß wurde festgestellt, dass die sichere Einhaltung der geforderten Langwelligkeitsgrenzen im verformten Zustand durch gezielte Maßnahmen am Werkstoff möglich ist.

Das heißt, dass speziell durch eine Änderung der Legierungszusammensetzung bei den verwendeten IF- und BH-Stählen eine fertigungssichere Produktion von Außenhautmaterialien mit reduzierter Langwelligkeit im verformten Zustand erreicht werden kann.

Dementsprechend wurde erfindungsgemäß herausgefunden, dass eine gesicherte Einstellung von reduzierter Langwelligkeit im verformten Zustand insbesondere bei IF-Stählen und Bake-Hardening-Stählen durch das Zulegieren von Niob mit Gehalten >0,01 Gew.-% erreichbar ist. Insbesondere kann z. B. die Stahlsorte HX180BD hiermit mit einem Wsa-Wert auf einem Niveau unter 0,30 µm stabilisiert werden.

Wird bei einem Einsatz von IF-Stählen anstatt des üblichen Titan-Konzeptes für Außenhautbleche ein Titan-Niob-Konzept verwendet, kann das Wsa-Niveau auf im Mittel 0,27 µm stabilisiert werden.

Wie erfindungsgemäß festgestellt werden konnte, wird die Langwelligkeit im verformten Zustand bei der Wahl geeigneter Dressierwalzen durch die vor dem Dressiervorgang im Zuge des Abstreifvorganges eingestellte Langwelligkeit nicht signifikant beeinflusst.

Als Vorteil hat sich auch erwiesen, dass bei Zugabe von Nb zum Stahl die Aufheizraten beim Rekristallisationsglühen in einem weiten Bereich variiert werden können, ohne den Wsa-Wert negativ zu beeinflussen. Die Aufheizraten liegen erfindungsgemäß zwischen 8 und 30 K/s.

Der Dressier- oder Nachwalzvorgang dient der Einstellung der mechanischen Eigenschaften und der gezielten Beeinflussung der Oberflächenrauheit. Im Zuge dieses Vorganges wird sowohl Rauheit als auch Langwelligkeit von der Walze auf das Band übertragen.

Der Dressiergrad für die BH-Stähle liegt zur Einstellung der geforderten Materialeigenschaften bei größer oder gleich 1%, bevorzugt größer 1,1%.

Die Erfindung wird anhand einiger Zeichnungen beispielhaft erläutert. Es zeigen hierbei:
- Figur 1:: Die Wsa-Werte im unverformten und verformten Zustand bei dressiertem Bake-Hardening-Stahlmaterial aus dem Stand der Technik;
- Figur 2:: Die Gegenüberstellung der Langwelligkeit bei dressiertem Bake-Hardening-Stahl nach dem Stand der Technik (bis Beispiel 86) gegen die erfindungsgemäß verbesserten Wsa-Werte jeweils vor und nach der Verformung (Beispiele 87 bis 184);
- Figur 3:: Den Zusammenhang zwischen dem Niob-Gehalt im Grundmaterial (BH-Stahl dressiert) und den gemessenen Wsa-Werten im verformten Zustand;
- Figur 4:: Der Wsa-Wert in Abhängigkeit von der Verformung und dem verwendeten Abstreifmedium bei der Schmelztauchbeschichtung;
- Figur 5:: Die Verbesserung der Wsa-Werte durch die Zulegierung von Niob;
- Figur 6:: Ein Diagramm zeigend den Wsa-Wert über den Gehalt an Niob im verformten Zustand bei einem dressierten IF-Stahl;

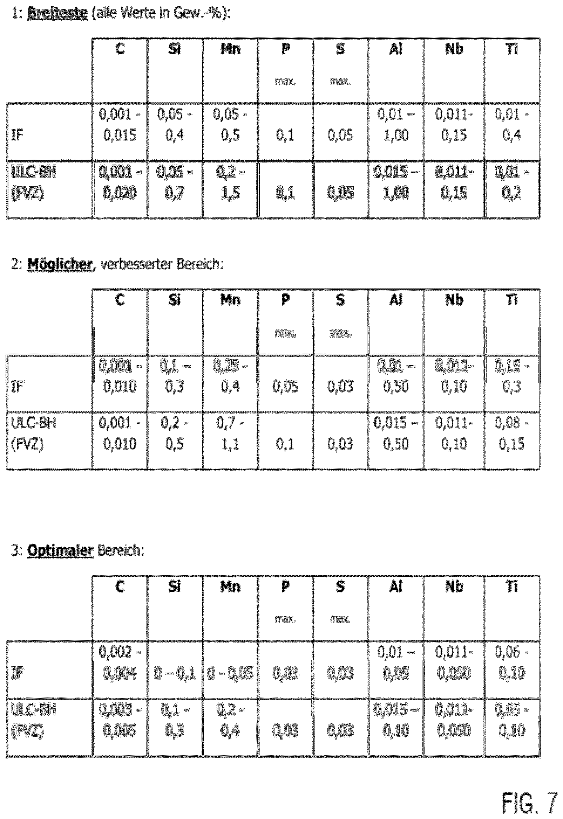

- Figur 7:: Drei Zusammensetzungsbereiche für erfindungsgemäße IF- und ULC-BH-Stähle;
- Figur 8-13:: Erfindungsgemäße IF- und BH-Stähle;

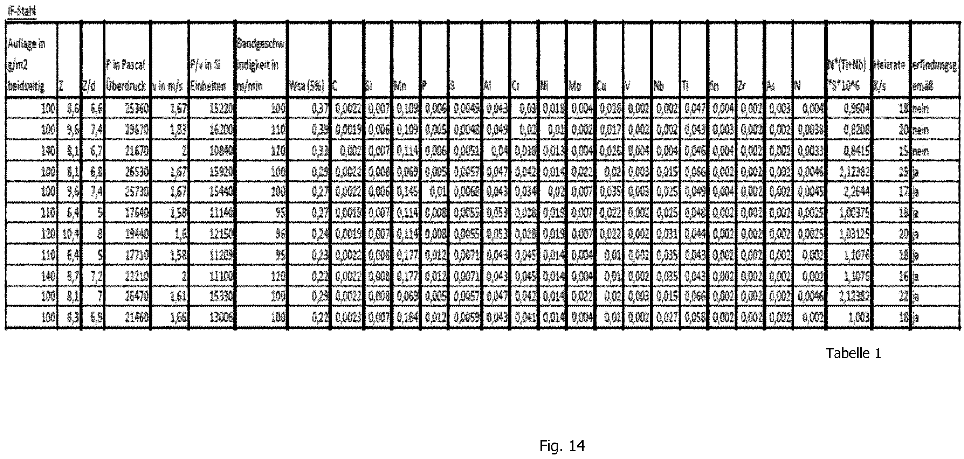

- Figur 14:: Beispiele mit IF-Stählen mit Zinküberzug;

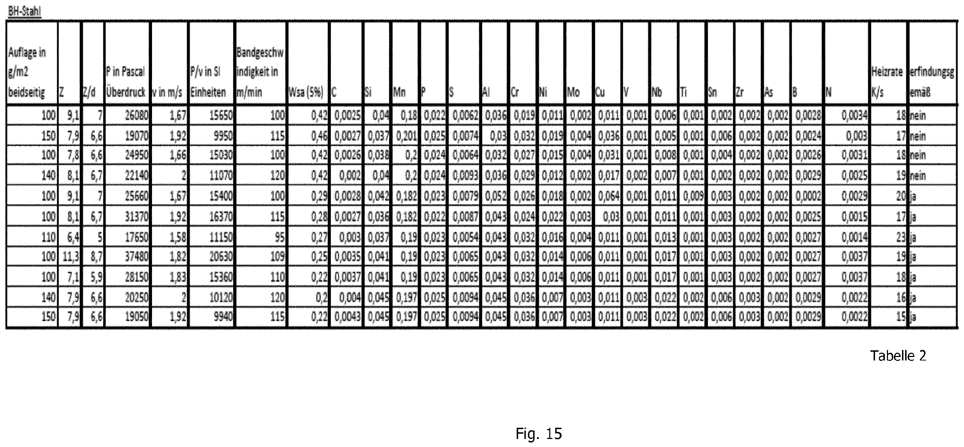

- Figur 15:: Beispiele mit BH-Stählen mit Zinküberzug;
- Figur 16:: weitere Beispiele für IF-Stähle mit einem metallischen Überzug aus ZnMg;
- Figur 17:: weitere Beispiele für BH-Stähle mit einem metallischen Überzug aus ZnMg.

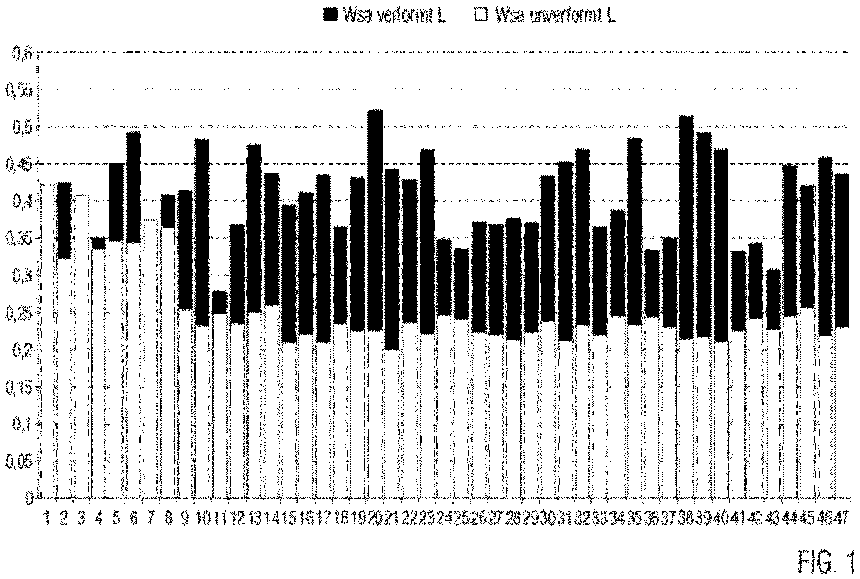

In Figur 1 sieht man einen handelsüblichen Bake-Hardening-Stahl, welcher nach dem Stand der Technik hergestellt und verarbeitet wurde. Hierbei sind die hellen Balken die Wsa-Werte für den unverformten Zustand und die schwarzen Balken die Werte für den verformten Zustand. Eine durch Optimierung des Dressiervorganges gegebene Verbesserung der Wsa-Werte im unverformten Zustand spiegelt sich nicht in den Wsa-Werten im verformten Zustand wieder.

Man erkennt, dass eine ganz erhebliche Schwankungsbreite bei den verformten Wsa-Werten vorliegt. Gleichzeitig ergibt sich ein signifikanter Anstieg der Wsa-Werte im Zuge der Verformung. Diese extrem breite Streuung der Werte, die längs zur Walzrichtung an Marciniak Prüfkörpern mit fünfprozentiger Verformung ermittelt wurden, zeigt, dass der Wsa-Wert nach dem Stand der Technik kaum beherrschbar ist.

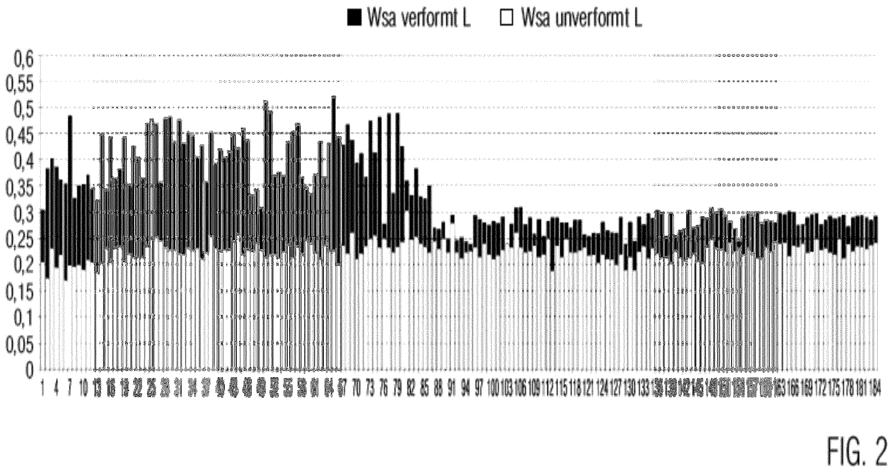

In Figur 2 erkennt man diese erhebliche Streuung bei den Wsa-Werten, wobei wiederum die verformten Werte bis zum Beispiel 86 noch stärker streuen als die unverformten Werte. Hierbei handelt es sich um Beispiele von einem Bake-Hardening-Stahl nach dem Stand der Technik.

Ab Beispiel 87 handelt es sich um einen erfindungsgemäßen Bake-Hardening-Stahl. Während die unverformten Wsa-Werte eine dem Stand der Technik entsprechende Streuung haben, kann man sehr gut die vorteilhaften, erheblich verbesserten Wsa-Werte nach der Verformung erkennen. Man erkennt, dass mit der Erfindung die Werte gesichert um oder unter 0,30 µm gehalten werden können.

Erfindungsgemäß wird in der Legierung ein Niob-Gehalt >0,01 Gew.-% (= 100 ppm) eingestellt. Erfindungsgemäß wird bevorzugt der Niob-Gehalt auf 0,011 bis 0,15 Gew.-% eingestellt, weiter bevorzugt auf 0,011 bis 0,10 Gew.-% und weiter bevorzugt auf 0,011 bis 0,05 Gew.-%. Mit diesen Werten können ausgesprochen gute Wsa-Werte erzielt werden.

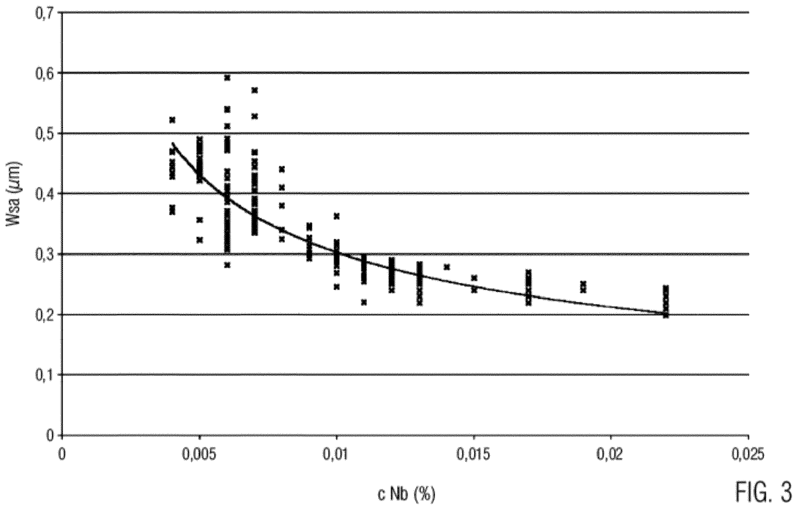

In Figur 3 ist der signifikante Zusammenhang zwischen dem Nb-Gehalt im BH-Stahl und dem sich einstellenden Wsa-Niveau nach Umformung (5%) zu erkennen. Mit zunehmendem Gehalt an Nb wird nicht nur der Wsa-Wert niedriger, auch die Streuung nimmt signifikant ab.

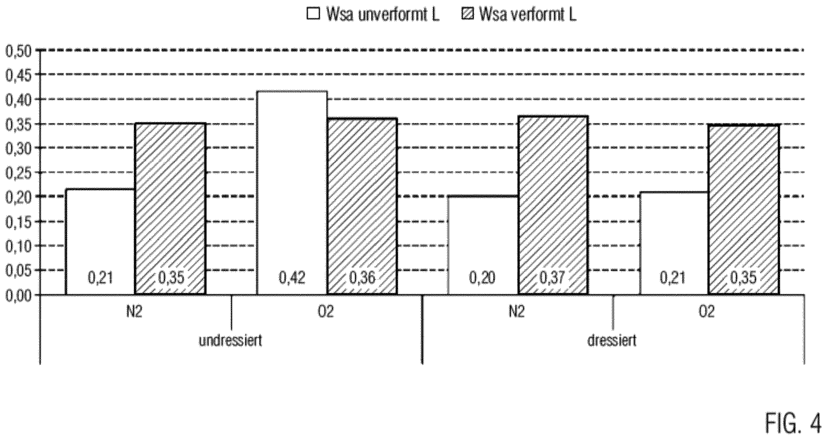

In Figur 4 erkennt man, dass im Stand der Technik bei der Verwendung von herkömmlichen IF-Stählen mit Niob-Gehalten <0,002 Gew.-% eine Abhängigkeit der Wsa-Werte im undressierten unverformten Zustand von den Abstreifbedingungen im Zuge der Aufbringung eines metallischen Überzuges nach dem Sendzimirverfahren gegeben ist. Mit Stickstoff als Abstreifmedium sind deutlich geringere Werte erzielbar. Dieser durch das Abstreifen mit Stickstoff gegebene Vorteil ist nach dem Verformen nicht mehr vorhanden.

Durch den Einsatz geeigneter Dressierwalzen ist es möglich, die Welligkeitswerte des metallisch beschichteten Bandes im unverformten Zustand unabhängig vom Abstreifmedium auf ein geringes Niveau zu reduzieren. Diese Verbesserung lässt sich jedoch im verformten Zustand nicht mehr darstellen.

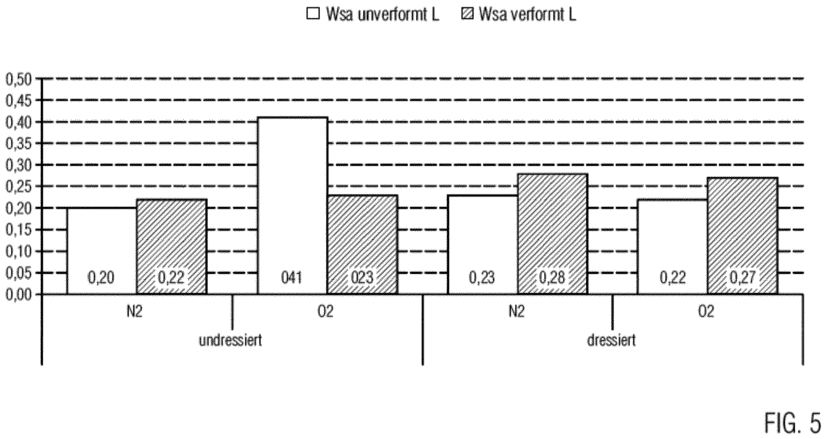

In einem Vergleichsversuch wird die Langwelligkeit an einem IF-Stahl mit einem erfindungsgemäßen Niob-Gehalt von 0,015 Gew.-% (Figur 5) ebenfalls jeweils undressiert und dressiert gemessen, wobei auch hier eine Beschichtung nach dem Sendzimir-Verfahren vorliegt und einmal mit Stickstoff und einmal mit Luft abgestreift wurde.

Durch die Zugabe von Nb konnte erreicht werden, dass kein oder kaum ein Anstieg der Wsa-Werte durch die Verformung gegeben ist.

Insbesondere nach der Verformung zeigen die erfindungsgemäß produzierten IF-Stähle erheblich bessere Eigenschaften als handelsübliche IF-Stähle nach dem Stand der Technik.

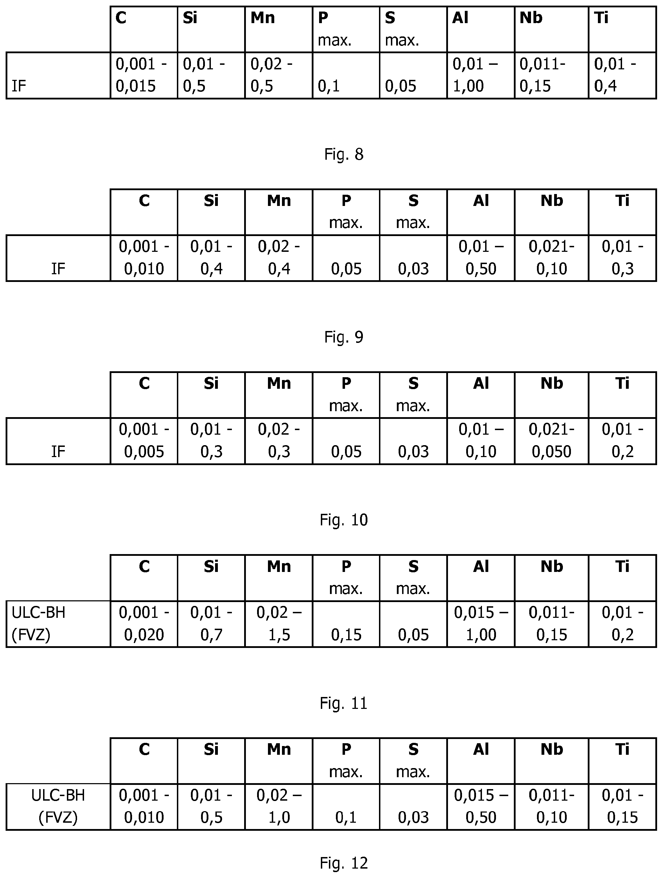

Erfindungsgemäß kann der IF-Stahl die Legierungszusammensetzung aufweisen nach den Figuren 8, 9 und 10 (alle Werte in Gewichtsprozent).

Alternativ kann bei der Zusammensetzung nach Fig. 8 anstelle von, als auch in Kombination mit Niob auch
Vanadin zwischen 0,01 und 0,15 Gew.-%,
Zirkon zwischen 0,01 und 0,3 Gew.-%,
Hafnium zwischen 0,02 und 0,5 Gew.-%,
Wolfram zwischen 0,02 und 0,5 Gew.-% oder
Tantal zwischen 0,02 und 0,5 Gew.-% zulegiert werden.

Bevorzugt weist der IF-Stahl die Zusammensetzung nach Fig. 9 auf:
Alternativ kann bei der Zusammensetzung nach Fig. 9 anstelle von, als auch in Kombination mit Niob auch
Vanadin zwischen 0,01 und 0,12 Gew.-%,
Zirkon zwischen 0,01 und 0,25 Gew.-%,
Hafnium zwischen 0,02 und 0,4 Gew.-%,
Wolfram zwischen 0,02 und 0,4 Gew.-% oder
Tantal zwischen 0,02 und 0,4 Gew.-% zulegiert werden.

Eine besonders bevorzugte Zusammensetzung des IF-Stahles ergibt sich aus Fig. 10, wobei alternativ anstelle von, als auch in Kombination mit Niob auch
Vanadin zwischen 0,01 und 0,10 Gew.-%,
Zirkon zwischen 0,01 und 0,2 Gew.-%,
Hafnium zwischen 0,02 und 0,3 Gew.-%,
Wolfram zwischen 0,02 und 0,3 Gew.-% oder
Tantal zwischen 0,02 und 0,3 Gew.-% zulegiert werden kann.

Rest jeweils Eisen und erschmelzungsbedingte Verunreinigungen.

Die oben genannten Elemente können einzeln oder in Kombination von mehreren dieser Elemente zulegiert werden, beispielsweise also jeweils 0,02 Gew.-% Hafnium und Wolfram.
Erfindungsgemäß kann der BH-Stahl die Legierungszusammensetzung nach Fig. 11 aufweisen (alle Werte in Gewichtsprozent), wobei
alternativ anstelle von, als auch in Kombination mit Niob auch
Vanadin zwischen 0,01 und 0,15 Gew.-%,
Zirkon zwischen 0,01 und 0,3 Gew.-%,
Hafnium zwischen 0,02 und 0,5 Gew.-%,
Wolfram zwischen 0,02 und 0,5 Gew.-% oder
Tantal zwischen 0,02 und 0,5 Gew.-% zulegiert werden kann.

Bevorzugt weist der BH-Stahl die Zusammensetzung nach Fig. 12 auf, wobei
alternativ anstelle von, als auch in Kombination mit Niob auch
Vanadin zwischen 0,01 und 0,12 Gew.-%,
Zirkon zwischen 0,01 und 0,25 Gew.-%,
Hafnium zwischen 0,02 und 0,4 Gew.-%,
Wolfram zwischen 0,02 und 0,4 Gew.-% oder
Tantal zwischen 0,02 und 0,4 Gew.-% zulegiert werden kann.

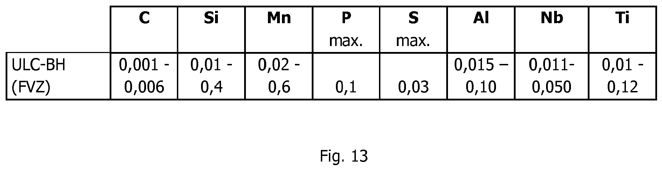

Besonders bevorzugt ist BH-Stahl mit der Zusammensetzung nach Fig. 13, wobei alternativ anstelle von, als auch in Kombination mit Niob auch
Vanadin zwischen 0,01 und 0,10 Gew.-%,
Zirkon zwischen 0,01 und 0,2 Gew.-%,
Hafnium zwischen 0,02 und 0,3 Gew.-%,
Wolfram zwischen 0,02 und 0,3 Gew.-% oder
Tantal zwischen 0,02 und 0,3 Gew.-% zulegiert werden kann.

Rest jeweils Eisen und erschmelzungsbedingte Verunreinigungen.

Auch hier können die Elemente einzeln oder in Kombination zulegiert werden, wobei die Menge sich stöchiometrisch in den jeweiligen Bereichen ergibt.

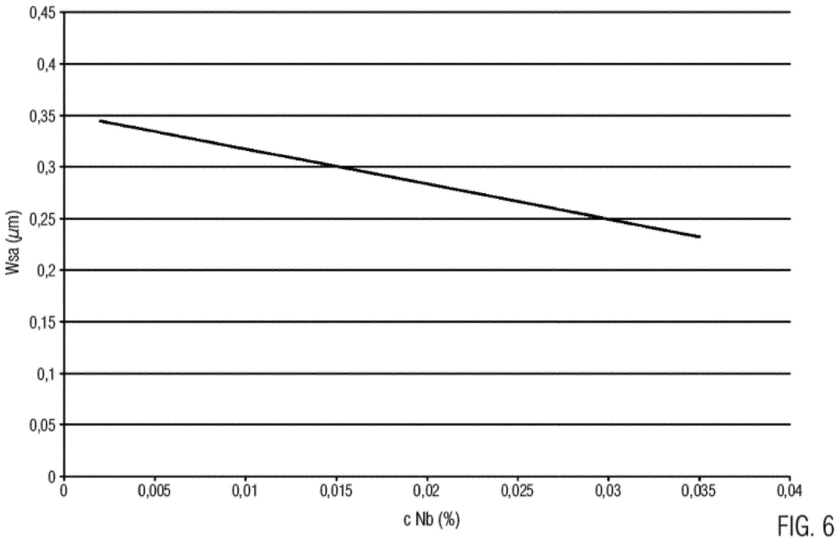

In Figur 6 ist der entsprechende gemessene Zusammenhang am IF-Stahl ersichtlich, welcher die Wsa-Werte nach Verformung über dem Niob-Gehalt anzeigt. Hierbei ist eine stetige Verbesserung des Wsa-Wertes mit Zunahme des Nb-Gehaltes erkennbar. Dieser Zusammenhang ist vermutlich auch bei Zulegierungen über 0,04 Gew.-% Niob hinaus gegeben. Jedoch ermöglichen die erfindungsgemäßen Bereiche einerseits eine ausreichende Wsa-Wertabsenkung und verhindern andererseits unerwünschte Verfestigungseffekte beim Grundmaterial, welche zu einer Verringerung der Umformbarkeit führen würden.

Für eine geringe Langwelligkeit im unverformten und in weiterer Folge im verformten Zustand wird die Walzenrauheit (Ra) für den Dressiervorgang erfindungsgemäß auf Werte zwischen 1,6 und 3,3 µm eingestellt, um die vom Kunden geforderten Rauheitswerte am Band einhalten zu können. Eine weitere Absenkung der Wsa-Werte ist durch Absenkung der Walzenrauheiten möglich, würde aber eine Absenkung der kundenseitigen Rauheitsvorgaben bedingen.

Als Beschichtungsmaterial bei Feuerverzinkungen sind insbesondere alle Feuerverzinkungstauchbäder geeignet.

Insbesondere geeignet ist für die Beschichtung von IF- oder auch Bake-Hardening-Stählen eine Zinkmagnesiumbeschichtung, wobei das Zinkbad 0,2 bis 8,0 Gew.- % Magnesium enthält.

Anstelle von Magnesium kann auch Aluminium in der Schmelze verwendet werden bzw. können innerhalb der angegebenen Grenzen von 0,2 bis 8 Gew.-% auch Magnesium und Aluminium gleichermaßen verwendet werden.

Bevorzugt liegt bei einer Mischung der Bereich bei 2 Gew.-% Magnesium und 2 Gew.-% Aluminium bzw. 2,5 Gew.-% Aluminium und 1,5 Gew.-% Magnesium.

Beschichtungen im Sinne der Anmeldung sind metallische Überzüge.

Bei der Erfindung ist von Vorteil, dass es durch Maßnahmen innerhalb des Legierungskonzeptes im Stahl gelingt, den Wsa-Wert auf einem sehr niedrigen Niveau sehr stabil darzustellen.

Die folgenden Beispiele sollen den positiven Einfluss des Niobgehaltes auf die Ausbildung des Wsa-Werteniveaus am umgeformten Bauteil (gemessen an Marciniak-Streckziehproben mit 5% Verformung) darstellen und diesen von anderen Einflüssen abgrenzen.

Bei den im Folgenden aufgelisteten Beispielen für die Beschichtungsvarianten Z und ZM wurden der Vollständigkeit halber Bandgeschwindigkeiten und Düseneinstellungen mit angegeben. Sie liegen alle innerhalb der nach dem Stand der Technik üblichen Parameter, haben jedoch keinen signifikanten Einfluss auf die Wsa-Werte im verformten Zustand. Die Abstreifung erfolgte ausschließlich mit Stickstoff, da ansonsten die optische Anmutung der Bleche nicht zur Zufriedenheit der Kunden produziert werden konnte.

Folgende Tabellen zeigen bei einer üblichen Zinkbeschichtung beispielsweise nach einer Feuerverzinkung sowohl die Abstreifparameter als auch die entsprechenden Welligkeitswerte.

Z ist der Abstand zwischen dem Band und der Abstreifdüse längs der Abstreifmedienaustrittstelle, d die mittlere Höhe der Austrittsstelle der Düse über dem Zinkbad; beide Angaben in mm.

v entspricht der Bandgeschwindigkeit in m/s.

Die Legierungszusammensetzung zeigt die jeweiligen Legierungselemente in Gewichtsprozent.

Vor allem wird aus den Beispielen in der Tabelle deutlich, dass die Düsenparameter kaum Einfluss auf die Welligkeitswerte haben, da die erfindungsgemäßen als auch nicht erfindungsgemäßen Ausführungsbeispiele mit ähnlichen Düsenparametern hergestellt wurden.

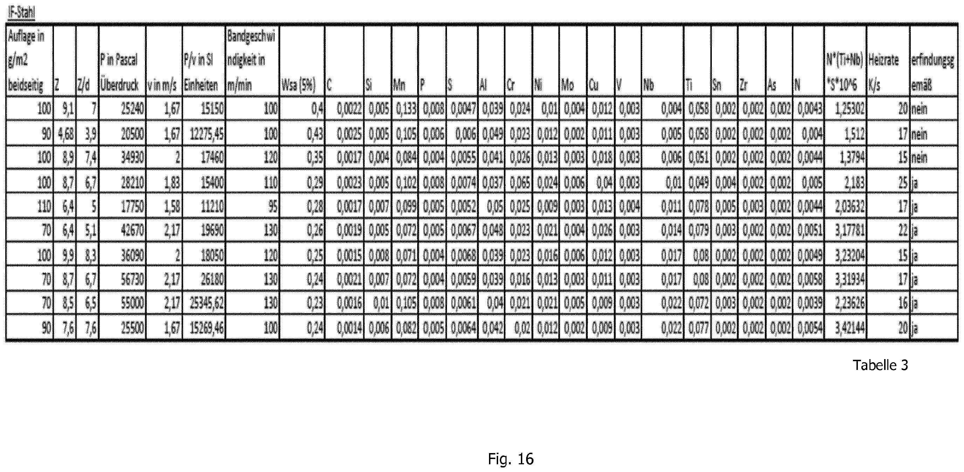

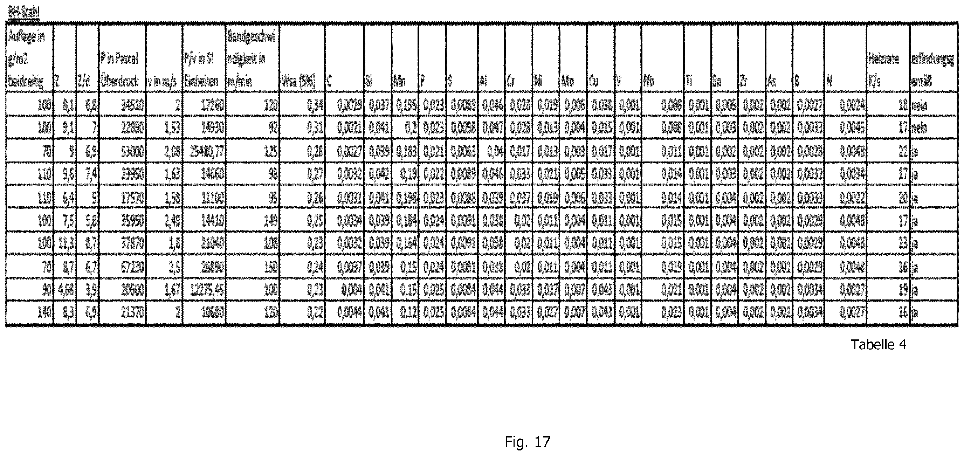

Wie die Beispiele in Tabelle 3 (entspricht Fig. 16) bzw. Tabelle 4 (entspricht Fig. 17) verdeutlichen, kann bei einer ZnMg-Beschichtung auf IF- und BH-Stählen der Wsa-Wert im verformten Zustand ab einem Nb-Gehalt von 0,01 Gew.-% sicher um bzw. unter 0,3 µm gehalten werden. Bei zunehmendem Gehalt an Nb sinkt der im verformten Zustand erzielbare Wsa-Wert weiter, sodass ab 0,02 Gew.-% an Nb Werte unter 0,25 µm gesichert erreicht werden können. Dies gilt nur unter der Voraussetzung, dass die Wsa-Werte im unverformten Zustand nicht höher als die hier angegebenen Werte sind.

Auch hier wird deutlich, dass die Düseneinstellung keinen wesentlichen Einfluss auf die Welligkeit hat.

Z ist der Abstand zwischen dem Band und der Abstreifdüse längs der Abstreifmedienaustrittstelle, d die mittlere Höhe der Austrittsstelle der Düse über dem Zinkbad; beide Angaben in mm.

v entspricht der Bandgeschwindigkeit in m/s.

Jeweils mit ZM Beschichtung mit 1,5 Gew.-% Mg, 2,5 Gew.-%

Alle Legierungsgehalte sind in Gew.-% angegeben, sofern nicht explizit davon abweichend dargestellt.

## Patentansprüche

1. Verfahren zum Herstellen von Stahlblech, insbesondere für Außenhautbleche von Fahrzeugen, wobei eine Stahllegierung einer gewünschten Zusammensetzung erschmolzen, vergossen und anschließend zu Blech gewalzt wird, das Stahlblech nach dem Walzen geglüht, danach mit einer metallischen Korrosionsschutzschicht versehen und anschließend dressiert wird, wobei die Stahllegierung die folgende Analyse in Gew.-% aufweist:
| | | | |
|---|---|---|---|
| C | 0,001 bis 0,020 | bevorzugt 0,001-0,010 | weiter bevorzugt 0,001-0,006 |
| Si | 0,01 bis 0,7 | bevorzugt 0,01-0,5 | weiter bevorzugt 0,01-0,4 |
| Mn | 0,02 bis 1,5 | bevorzugt 0,02-1,0 | weiter bevorzugt 0,02-0,6 |
| P | max. 0,15 | bevorzugt max. 0,1 | weiter bevorzugt max. 0,1 |
| S | max. 0,05 | bevorzugt max. 0,03 | weiter bevorzugt max. 0,03 |
| Al | 0,015 bis 1,0 | bevorzugt 0,015-0,5 | weiter bevorzugt 0,015-0,10 |
| Nb | 0,011 bis 0,15 | bevorzugt 0,011-0,10 | weiter bevorzugt 0,011-0,05 |
| Ti | 0,01 bis 0,2 | bevorzugt 0,01-0,15 | weiter bevorzugt 0,01-0,12 |
Optional eines oder mehrere folgender Elemente:
Bor bis max. 100 ppm und/oder
Vanadium bis 0,4 Gew.-% und/oder
Zirkonium bis 0,4 Gew.-% und/oder
Hafnium bis 0,5 Gew.-%, und/oder
Wolfram bis 0,5 Gew.-%, und/oder
Tantal bis 0,5 Gew.-%, und/oder
Rest Eisen und erschmelzungsbedingte Verunreinigungen.
**dadurch gekennzeichnet,**
**dass** zur Erzielung eines Wsa-Wertes von unter 0.35 µm mit möglichst enger Streuung Niob mit einem Gehalt >0,01 Gew.-%, bevorzugt >0,011 Gew.-%, zulegiert wird, wobei Dressierwalzen mit einer Rauheit (Ra) von 1,6 bis 3,3 µm verwendet werden, wobei die Aufheizraten beim Rekristallisationsglühen zwischen 8 K/s und 30 K/s liegen.

2. Verfahren nach Anspruch 1, **dadurch gekennzeichnet, dass** ein BH-Stahl und insbesondere ein ULC-BH-Stahl mit der folgenden Analyse in Gew.-% erschmolzen wird:
| | | | |
|---|---|---|---|
| C | 0,001 bis 0,020 | bevorzugt 0,001-0,010 | weiter bevorzugt 0,001-0,006 |
| Si | 0,01 bis 0,7 | bevorzugt 0,01-0,5 | weiter bevorzugt 0,01-0,4 |
| Mn | 0,02 bis 1,5 | bevorzugt 0,02-1,0 | weiter bevorzugt 0,02-0,6 |
| P | max. 0,15 | bevorzugt max. 0,1 | weiter bevorzugt max. 0,1 |
| S | max. 0,05 | bevorzugt max. 0,03 | weiter bevorzugt max. 0,03 |
| Al | 0,015 bis 1,0 | bevorzugt 0,015-0,5 | weiter bevorzugt 0,015-0,10 |
| Nb | 0,011 bis 0,15 | bevorzugt 0,011-0,10 | weiter bevorzugt 0,011-0,05 |
| Ti | 0,01 bis 0,2 | bevorzugt 0,01-0,15 | weiter bevorzugt 0,01-0,12 |
Optional eines oder mehrere folgender Elemente:
Bor bis max. 100 ppm und/oder
Vanadium bis 0,4 Gew.-% und/oder
Zirkonium bis 0,4 Gew.-% und/oder
Hafnium bis 0,5 Gew.-%, und/oder
Wolfram bis 0,5 Gew.-%, und/oder
Tantal bis 0,5 Gew.-%, und/oder
Rest Eisen und erschmelzungsbedingte Verunreinigungen.

3. Verfahren nach Anspruch 1 oder 2, **dadurch gekennzeichnet, dass** ein BH-Stahl und insbesondere ein ULC-BH-Stahl mit der folgenden Analyse in Gew.-% erschmolzen wird:
| | | | |
|---|---|---|---|
| C | 0,001 bis 0,020 | bevorzugt 0,001-0,010 | weiter bevorzugt 0,001-0,006 |
| Si | 0,01 bis 0,7 | bevorzugt 0,01-0,5 | weiter bevorzugt 0,01-0,4 |
| Mn | 0,02 bis 1,5 | bevorzugt 0,02-1,0 | weiter bevorzugt 0,02-0,6 |
| P | max. 0,15 | bevorzugt max. 0,1 | weiter bevorzugt max. 0,1 |
| S | max. 0,05 | bevorzugt max. 0,03 | weiter bevorzugt max. 0,03 |
| Al | 0,015 bis 1,0 | bevorzugt 0,015-0,5 | weiter bevorzugt 0,015-0,10 |
| Nb | 0,01 bis 0,15 | bevorzugt 0,011-0,10 | weiter bevorzugt 0,011-0,05 |
| Ti | 0,01 bis 0,2 | bevorzugt 0,01-0,15 | weiter bevorzugt 0,01-0,12 |
Optional eines oder mehrere folgender Elemente:
Bor bis max. 100 ppm und/oder
Vanadium bis 0,4 Gew.-% und/oder
Zirkonium bis 0,4 Gew.-%, und/oder
Hafnium bis 0,5 Gew.-%, und/oder
Wolfram bis 0,5 Gew.-%, und/oder
Tantal bis 0,5 Gew.-%, und/oder
Rest Eisen und erschmelzungsbedingte Verunreinigungen.

4. Verfahren nach einem der vorhergehenden Ansprüche, **dadurch gekennzeichnet, dass** die metallische Korrosionsschutzschicht schmelzflüssig aufgetragen wird, wobei die Beschichtung eine Zinkbeschichtung, eine Zink-Magnesium-Beschichtung, eine Zink-Aluminium-Beschichtung, eine Zink-Aluminium-Magnesium-Beschichtung, eine AluminiumZink- oder eine Aluminium-Silizium-Beschichtung ist.

5. Verfahren nach Anspruch 4, **dadurch gekennzeichnet, dass** eine Beschichtung aufgebracht wird, die neben Zink 0,2 - 8 Gew.-% Magnesium und/oder Aluminium enthält.

6. Verfahren nach Anspruch 5, **dadurch gekennzeichnet, dass** die Beschichtung 2 - 2,5 Gew.-% Aluminium und 1,5 - 2 Gew.-% Magnesium enthält.

7. Verfahren nach einem der vorhergehenden Ansprüche, **dadurch gekennzeichnet, dass** der Dressiergrad größer oder gleich 0,9% bevorzugt größer 1,0% besonders bevorzugt größer 1,1% beträgt.

8. Stahlblech hergestellt mit einem Verfahren nach einem der vorhergehenden Ansprüche mit einer Zusammensetzung gemäß Anspruch 2 oder Anspruch 3.

9. Verwendung eines Stahlblechs nach Anspruch 8 für Außenhautteile von Kraftfahrzeugen und Gebäuden.

## Claims

1. Method for the manufacture of steel sheet, in particular for the outer skin panels of vehicles, wherein a steel alloy of a desired composition is melted, cast and subsequently rolled into sheet, which sheet steel is annealed after rolling, after which it is provided with a metallic anti-corrosion coating and subsequently ski-passed, wherein the steel alloy has the following analysis in wt%:
| | | | |
|---|---|---|---|
| C | 0.001 to 0.020 | preferably 0.001-0.010 | more preferably 0.001-0.006 |
| Si | 0.01 to 0.7 | preferably 0.01-0.5 | more preferably 0.01-0.4 |
| Mn | 0.02 to 1.5 | preferably 0.02-1.0 | more preferably 0.02-0.6 |
| P | max. 0.15 | preferably max. 0.1 | more preferably max. 0.1 |
| S | max. 0.05 | preferably max. 0.03 | more preferably max. 0.03 |
| Al | 0.015 to 1.0 | preferably 0.015-0.5 | more preferably 0.015-0.10 |
| Nb | 0.011 to 0.15 | preferably 0.011-0.10 | more preferably 0.011-0.05 |
| Ti | 0.01 to 0.2 | preferably 0.01-0.15 | more preferably 0.01-0.12 |
Optionally, one or a plurality of the following elements:
boron up to max. 100 ppm and/or
vanadium up to 0.4 wt% and/or
zirconium up to 0.4 wt% and/or
hafnium up to 0.5 wt%, and/or
tungsten up to 0.5 wt%, and/or
tantalum up to 0.5 wt%, and/or
the remainder of iron and impurities introduced by melting
**characterised in that**,
to achieve a Wsa value of below 0.35 µm, a preferably dense dispersion of niobium with a content of >0.01 wt%, preferably >0.011 wt%, is added to the alloy, wherein skin pass rollers with a roughness (Ra) of 1.6 to 3.3 µm are used, wherein the heating rates during the recrystallisation annealing process lie between 8 K/s and 30 K/s.

2. Method according to Claim 1, **characterised in that** a BH steel and in particular a ULC-BH steel with the following analysis in wt% is melted:
| | | | |
|---|---|---|---|
| C | 0.001 to 0.020 | preferably 0.001-0.010 | more preferably 0.001-0.006 |
| Si | 0.01 to 0.7 | preferably 0.01-0.5 | more preferably 0.01-0.4 |
| M | 0.02 to 1.5 | preferably 0.02-1.0 | more preferably 0.02-0.6 |
| P | max. 0.15 | preferably max. 0.1 | more preferably max. 0.1 |
| S | max. 0.05 | preferably max. 0.03 | more preferably max. 0.03 |
| Al | 0.015 to 1.0 | preferably 0.015-0.5 | more preferably 0.015-0.10 |
| N | 0.011 to 0.15 | preferably 0.011-0.10 | more preferably 0.011-0.05 |
| Ti | 0.01 to 0.2 | preferably 0.01-0.15 | more preferably 0.01-0.12 |
Optionally, one or a plurality of the following elements:
boron up to max. 100 ppm and/or
vanadium up to 0.4 wt% and/or
zirconium up to 0.4 wt% and/or
hafnium up to 0.5 wt%, and/or
tungsten up to 0.5 wt%, and/or
tantalum up to 0.5 wt%, and/or
the remainder of iron and impurities introduced by melting.

3. Method according to Claim 1 or 2, **characterised in that** a BH steel and in particular a ULC-BH steel with the following analysis in wt% is melted:
| | | | |
|---|---|---|---|
| C | 0.001 to 0.020 | preferably 0.001-0.010 | more preferably 0.001-0.006 |
| Si | 0.01 to 0.7 | preferably 0.01-0.5 | more preferably 0.01-0.4 |
| M | 0.02 to 1.5 | preferably 0.02-1.0 | more preferably 0.02-0.6 |
| P | max. 0.15 | preferably max. 0.1 | more preferably max. 0.1 |
| S | max. 0.05 | preferably max. 0.03 | more preferably max. 0.03 |
| Al | 0.015 to 1.0 | preferably 0.015-0.5 | more preferably 0.015-0.10 |
| N | 0.01 to 0.15 | preferably 0.011-0.10 | more preferably 0.011-0.05 |
| Ti | 0.01 to 0.2 | preferably 0.01-0.15 | more preferably 0.01-0.12 |
Optionally, one or a plurality of the following elements:
boron up to max. 100 ppm and/or
vanadium up to 0.4 wt% and/or
zirconium up to 0.4 wt%, and/or
hafnium up to 0.5 wt%, and/or
tungsten up to 0.5 wt%, and/or
tantalum up to 0.5 wt%, and/or
the remainder of iron and impurities introduced by melting.

4. Method according to one of the preceding claims, **characterised in that** the metallic anti-corrosion coating is applied molten, wherein the coating is a zinc coating, a zinc-magnesium coating, a zinc-aluminium coating, a zinc-aluminium-magnesium coating, an aluminium-zinc or an aluminium-silicon coating.

5. Method according to Claim 4, **characterised in that** a coating is applied that, in addition to zinc 0.2 - 8 wt%, contains magnesium and/or aluminium.

6. Method according to Claim 5, **characterised in that** the coating contains 2 - 2.5 wt% aluminium and 1.5 - 2 wt% magnesium.

7. Method according to one of the preceding claims, **characterised in that** the degree of skin passing is greater or equal to 0.9%, preferably greater than 1.0%, more preferably greater than 1.1%.

8. Steel sheet manufactured by a method according to one of the preceding claims with a composition according to Claim 2 or Claim 3.

9. Use of a steel sheet according to Claim 8 for the outer skin parts of vehicles and buildings.

## Revendications

1. Procédé de fabrication de tôle d'acier, en particulier pour des tôles destinées à former une peau extérieure de véhicules, un alliage d'acier d'une composition souhaitée étant fondu, coulé puis laminé sous forme de tôle, la tôle d'acier est recuite après le laminage, revêtue ensuite d'une couche métallique de protection contre la corrosion puis dressée, l'alliage d'acier présentant l'analyse suivante en % en poids :
| | | | |
|---|---|---|---|
| C | 0,001 à 0,020 | de préférence 0,001-0,010 | de préférence encore 0,001-0,006 |
| Si | 0,01 à 0,7 | de préférence 0,01-0,5 | de préférence encore 0,01-0,4 |
| Mn | 0,02 à 1,5 | de préférence 0,02-1,0 | de préférence encore 0,02-0,6 |
| P | max. 0,15 | de préférence 0,1 max. | de préférence encore 0,1 max. |
| S | max. 0,05 | de préférence 0,03 max. | de préférence encore 0,03 max. |
| Al | 0,015 à 1,0 | de préférence 0,015-0,5 | de préférence encore 0,015-0,10 |
| Nb | 0,011 à 0,15 | de préférence 0,011-0,10 | de préférence encore 0,011-0,05 |
| Ti | 0,01 à 0,2 | de préférence 0,01-0,15 | de préférence encore 0,01-0,12 |
en option, un ou plusieurs des éléments suivants :
Bore jusqu'à 100 ppm max. et/ou
Vanadium jusqu'à 0,4 % en poids et/ou
Zirconium jusqu'à 0,4 % en poids et/ou
Hafnium jusqu'à 0,5 % en poids, et/ou
Tungstène jusqu'à 0,5 % en poids, et/ou
Tantale jusqu'à 0,5 % en poids, et/ou
le reste étant du fer et des impuretés dues à l'élaboration,
**caractérisé en ce**
**que**, pour obtenir une valeur Wsa inférieure à 0,35 µm avec une dispersion aussi étroite que possible, on allie du niobium avec une teneur >0,01 % en poids, de préférence >0,011 % en poids, en utilisant des cylindres de dressage avec une rugosité (Ra) de 1,6 à 3,3 µm, les vitesses de chauffage lors du recuit de recristallisation étant comprises entre 8 K/s et 30 K/s.

2. Procédé selon la revendication 1, **caractérisé en ce qu'**un acier BH et en particulier un acier ULC-BH est fondu avec l'analyse suivante en % en poids :
| | | | |
|---|---|---|---|
| C | 0,001 à 0,020 | de préférence 0,001-0,010 | de préférence encore 0,001-0,006 |
| Si | 0,01 à 0,7 | de préférence 0,01-0,5 | de préférence encore 0,01-0,4 |
| Mn | 0,02 à 1,5 | de préférence 0,02-1,0 | de préférence encore 0,02-0,6 |
| P | max. 0,15 | de préférence 0,1 max. | de préférence encore 0,1 max. |
| S | max. 0,05 | de préférence 0,03 max. | de préférence encore 0,03 max. |
| Al | 0,015 à 1,0 | de préférence 0,015-0,5 | de préférence encore 0,015-0,10 |
| | | | |
|---|---|---|---|
| Nb | 0,011 à 0,15 | de préférence 0,011-0,10 | de préférence encore 0,011-0,05 |
| Ti | 0,01 à 0,2 | de préférence 0,01-0,15 | de préférence encore 0,01-0,12 |
en option, un ou plusieurs des éléments suivants :
Bore jusqu'à 100 ppm max. et/ou
Vanadium jusqu'à 0,4 % en poids et/ou
Zirconium jusqu'à 0,4 % en poids et/ou
Hafnium jusqu'à 0,5 % en poids, et/ou
Tungstène jusqu'à 0,5 % en poids, et/ou
Tantale jusqu'à 0,5 % en poids, et/ou
le reste étant du fer et des impuretés dues à l'élaboration.

3. Procédé selon la revendication 1 ou 2, **caractérisé en ce qu'**un acier BH et en particulier un acier ULC-BH est fondu avec l'analyse suivante en % en poids :
| | | | |
|---|---|---|---|
| C | 0,001 à 0,020 | de préférence 0,001-0,010 | de préférence encore 0,001-0,006 |
| Si | 0,01 à 0,7 | de préférence 0,01-0,5 | de préférence encore 0,01-0,4 |
| Mn | 0,02 à 1,5 | de préférence 0,02-1,0 | de préférence encore 0,02-0,6 |
| P | max. 0,15 | de préférence 0,1 max. | de préférence encore 0,1 max. |
| S | max. 0,05 | de préférence 0,03 max. | de préférence encore 0,03 max. |
| Al | 0,015 à 1,0 | de préférence 0,015-0,5 | de préférence encore 0,015-0,10 |
| Nb | 0,01 à 0,15 | de préférence 0,011-0,10 | de préférence encore 0,011-0,05 |
| Ti | 0,01 à 0,2 | de préférence 0,01-0,15 | de préférence encore 0,01-0,12 |
en option, un ou plusieurs des éléments suivants :
Bore jusqu'à 100 ppm max. et/ou
Vanadium jusqu'à 0,4 % en poids et/ou
Zirconium jusqu'à 0,4 % en poids, et/ou
Hafnium jusqu'à 0,5 % en poids, et/ou
Tungstène jusqu'à 0,5 % en poids, et/ou
Tantale jusqu'à 0,5 % en poids, et/ou
le reste étant du fer et des impuretés dues à l'élaboration.

4. Procédé selon l'une des revendications précédentes, **caractérisé en ce que** la couche métallique de protection contre la corrosion est appliquée à l'état fondu, le revêtement étant un revêtement de zinc, un revêtement de zinc-magnésium, un revêtement de zinc-aluminium, un revêtement de zinc-aluminium-magnésium, un revêtement d'aluminium-zinc ou un revêtement d'aluminium-silicium.

5. Procédé selon la revendication 4, **caractérisé en ce qu'**un revêtement qui contient, outre du zinc, 0,2 à 8 % en poids de magnésium et/ou d'aluminium est appliqué.

6. Procédé selon la revendication 5, **caractérisé en ce que** le revêtement contient 2 à 2,5 % en poids d'aluminium et 1,5 à 2 % en poids de magnésium.

7. Procédé selon l'une des revendications précédentes, **caractérisé en ce que** le taux de dressage est supérieur ou égal à 0,9 %, de préférence supérieur à 1,0 %, de manière particulièrement préférable supérieur à 1,1 %.

8. Tôle d'acier fabriquée par un procédé selon l'une des revendications précédentes avec une composition selon la revendication 2 ou la revendication 3.

9. Utilisation d'une tôle d'acier selon la revendication 8 pour des éléments de peau extérieure de véhicules automobiles et de bâtiments.
